Europäisches Patentamt

European Patent Office

Office européen des brevets

(19)

(11) EP 0 589 757 B1

(12) FASCICULE DE BREVET EUROPEEN

(45) Date de publication et mention
de la délivrance du brevet:
**07.01.1999 Bulletin 1999/01**

(51) Int Cl.⁶: **H04M 17/00**, H04Q 7/20,
H04L 9/32

(21) Numéro de dépôt: **93402262.5**

(22) Date de dépôt: **16.09.1993**

(54) **Installation de télécommunication à téléchargement sécurisé de moyens de pré-paiement et procédé de téléchargement correspondant**

Telekommunikationsanlage mit gesicherter Fernladung von Vorbezahlungsmitteln und Fernladungsverfahren dafür

Telecommunications installation with secured downloading of prepayment means and method for the download

(84) Etats contractants désignés:
**DE GB**

(30) Priorité: **21.09.1992 FR 9211223**

(43) Date de publication de la demande:
**30.03.1994 Bulletin 1994/13**

(73) Titulaires:
• **FRANCE TELECOM**
  **75015 Paris (FR)**
• **LA POSTE**
  **F-75700 Paris (FR)**

(72) Inventeurs:
• **Nevoux, Rola**
  **F-78990 Elancourt (FR)**
• **Hiolle, Philippe**
  **F-14200 Hérouville Saint Clair (FR)**

(74) Mandataire: **Plaçais, Jean-Yves et al**
  **Cabinet Netter,**
  **40, rue Vignon**
  **75009 Paris (FR)**

(56) Documents cités:
EP-A- 0 459 065          EP-A- 0 463 384
EP-A- 0 480 833

• PHILIPS TDS REVIEW vol. 47, no. 3, Septembre 1989, HILVERSUM NL pages 1 - 19 R.C. FERREIRA 'The Smart Card: A high security tool in EDP'

**Description**

L'invention concerne le téléchargement sécurisé de moyens de pré-paiement.

Elle trouve une application générale en télécommunication et plus particulièrement dans les systèmes numériques de communication avec les mobiles publics fonctionnant dans la bande de 900 MHz, appelée encore "GLOBAL SYSTEM FOR MOBILE COMMUNICATION (GSM)". Elle trouve aussi une application dans les réseaux de communication filaire.

De façon connue, une installation de télécommunication comprend :

- au moins un réseau téléphonique commuté ;

- un système d'accès d'abonnés téléphoniques autonomes comprenant :

    . au moins une station de base reliée au réseau téléphonique commuté,

    . des moyens d'exploitation reliés à la station de base comprenant des moyens de taxation propres à calculer les taxes d'utilisation des services payants du réseau téléphonique commuté,

    . des premiers moyens de chiffrement/déchiffrement propres à établir une fonction cryptographique à l'aide d'une clé de stockage,

- au moins un poste autonome comprenant :

    . des moyens propres à établir une intercommunication avec la station de base,

    . des moyens de pré-paiement propres à contenir des unités de valeur destinées à payer les taxes d'utilisation calculées et transmises par les moyens de taxation,

    . des premiers moyens d'authentification-poste propres à établir une fonction d'authentification-poste à l'aide d'une clé de base-poste prédéterminée, personnelle à chaque abonné, et

- un centre d'autorisation comprenant :

    . des seconds moyens de chiffrement/déchiffrement propres à établir la fonction de chiffrement/déchiffrement à l'aide de la clé de stockage, et

    . des seconds moyens d'authentification-poste propres à établir la fonction d'authentification-poste à l'aide de la clé de base-poste.

Par exemple, dans l'application radiotéléphonique, le poste autonome accède à un service payant du réseau téléphonique commuté à l'issue d'une opération d'authentification de l'identité de l'abonné du poste autonome mettant en oeuvre les premiers et seconds moyens d'authentification-poste.

De préférence, l'authentification de l'identité de l'abonné du poste autonome est une authentification active avec l'échange entre le poste autonome et le centre d'autorisation d'un nombre aléatoire et du transformé de ce nombre aléatoire par la fonction d'authentification-poste à l'aide de la clé de base-poste personnelle à chaque abonné.

Une telle authentification permet seulement de s'assurer de l'authenticité de l'abonné et de l'autorisation pour cet abonné d'accéder aux services payants du réseau téléphonique commuté.

Elle ne permet pas de garantir à l'installation, qui dialogue avec l'abonné ainsi identifié et autorisé d'accès, que les moyens de pré-paiement qui servent à payer les taxes d'utilisation sont intègres pendant toute la durée de la communication.

La Demande de Brevet européen EP 0 480 833 déposée au nom du Demandeur apporte une solution à ce problème en mettant en oeuvre une authentification active des taxes d'utilisation pendant toute la durée de la communication à l'aide des premiers et seconds moyens d'authentification-poste.

Cette authentification active des taxes d'utilisation permet notamment :

- de certifier les taxes d'utilisation transmises par les moyens de taxation aux moyens de pré-paiement via l'interface radiotéléphonique ;

- de vérifier qu'elles ont été correctement reçues et comprises ; et

- de vérifier qu'elles ont été effectivement défalquées des moyens de pré-paiement.

Par ailleurs, on connaît des procédures pour recharger un nombre prédéterminé d'unités de valeur au profit des moyens de pré-paiement.

Ces procédures ont lieu en général en dehors des communications proprement dites, soit d'une manière locale, par exemple auprès du centre d'autorisation directement, ou bien auprès du poste autonome en "off line", sans liaison avec le centre d'autorisation, soit à distance, par exemple à travers une application spécialisée telle que le téléchargement par serveur MINITEL (Marque déposée), mais cette dernière procédure ne garantit pas la bonne réception des montants téléchargés, ni la non répudiation dudit téléchargement par le poste autonome.

Par ailleurs, le téléchargement des moyens de pré-paiement peut être rendu nécessaire lorsque l'abonné se trouve sous le contrôle d'un centre d'autorisation tiers, différent de celui qui a émis ou gère les moyens de pré-paiement et auprès duquel le poste autonome n'est pas rattaché commercialement (c'est le cas par exemple lorsqu'un abonné utilise son poste autonome dans une zone couverte par un opérateur autre que celui responsable de sa gestion, c'est-à-dire dans le cas du service dit de ROAMING dans l'application GSM).

Dans cette situation, la solution qui consiste à télécharger les moyens de pré-paiement à l'initiative du centre d'autorisation tiers n'est pas satisfaisante au niveau de la sécurité.

En effet, la confidentialité et l'intégrité de l'ordre de téléchargement et de son montant ne sont pas garanties, ce qui peut permettre des reproductions frauduleuses.

La présente invention apporte une solution à ce problème.

Ainsi, elle a pour but de fournir une installation de télécommunication capable d'assurer la confidentialité et l'intégrité de l'ordre de téléchargement et de son montant, même lorsque l'abonné visite un système d'accès auprès duquel le poste autonome n'est pas rattaché commercialement (service dit de ROAMING dans l'application GSM).

Le document EP-A-0 459 065 décrit un procédé sécurisé de téléchargement des données d'abonnement téléphonique en relation avec l'identification d'un poste mobile et sa personnalisation dans un service de ROAMING, mais ce procédé ne fait aucune référence à des moyens de pré-paiement qui doivent être rechargés.

Elle vise aussi à garantir pour le système d'accès ainsi visité que l'ordre de téléchargement ainsi que son montant ont été correctement reçus et compris et que le compteur d'unités des moyens de pré-paiement a été effectivement rechargé du nombre d'unités de valeur ainsi téléchargées.

Elle vise enfin un procédé de téléchargement sécurisé de moyens de pré-paiement garantissant la non répudiation de l'ordre de téléchargement par l'abonné.

La présente invention part d'une installation de télécommunication du type mentionné ci-avant.

Selon une première caractéristique de l'invention, le poste autonome comprend en outre :

- des premiers moyens générateurs propres à établir une fonction de génération à l'aide de la clé de base-poste ;

- des premiers moyens de téléchargement propres à établir une fonction de téléchargement à l'aide d'une clé de téléchargement qui est le transformé d'un mot prédéterminé par la fonction de génération à l'aide de la clé de base-poste ;

le système d'accès comprend en outre :

- des seconds moyens de téléchargement propres à émettre un nombre prédéterminé d'unités de valeur en réponse à un ordre de téléchargement prédéterminé et à établir la fonction de téléchargement à l'aide de la clé de téléchargement ;

- des premiers moyens d'authentification-système propres à établir une fonction d'authentification-système à l'aide d'une clé de base-système prédéterminée ; et

le centre d'autorisation comprend en outre :

- des seconds moyens d'authentification-système propres à établir la fonction d'authentification-système à l'aide de la clé de base-système ; et

- des seconds moyens générateurs propres à établir la fonction de génération à l'aide de la clé de base-poste, et l'installation selon l'invention comprend en outre un mode de téléchargement dans lequel en réponse à un mot-demande de téléchargement d'un nombre prédéterminé d'unités de valeur émanant du poste autonome, les premiers et seconds moyens d'authentifacon-poste, ainsi que les premiers et seconds moyens d'authentification-système, procèdent à une authentification active respective du poste autonome ainsi que du système d'accès, en échangeant respectivement un mot d'authentification-poste émanant du poste autonome et le transformé de ce mot par la fonction d'authentification-poste à l'aide de la clé de base-poste, ainsi qu'en échangeant un mot d'authentification-système, émanant du centre d'autorisation et le transformé de ce mot d'authentification-système par la fonction d'authentification-système à l'aide de la clé de base-système ;

en cas d'authenticité contrôlée du système d'accès et du poste autonome, les seconds moyens générateurs calculent au niveau du centre d'autorisation la clé de téléchargement qui est le transformé du mot-demande de téléchargement par la fonction de génération à l'aide de la clé de base-poste ;

en cas de génération de la clé de téléchargement au niveau du centre d'autorisation, les seconds moyens de chiffrement/déchiffrement transmettent la clé de téléchargement chiffrée à l'aide de la clé de stockage aux premiers moyens de chiffrement/ déchiffrement qui la déchiffrent en vue de la stocker au niveau du système d'accès ; et

en cas de stockage de la clé de téléchargement dans le système d'accès, les premiers et seconds moyens de téléchargement échangent le mot-demande de téléchargement du nombre d'unités de valeur à télécharger ainsi que le transformé dudit mot-ordre de téléchargement par la fonction de téléchargement à l'aide de la clé de téléchargement pour télécharger de façon sécurisée les moyens de pré-paiement dudit nombre d'unités de valeur.

Une telle installation a l'avantage de permettre à l'abonné, dont les moyens de pré-paiement ont été délivrés par un premier exploitant et qui se déplace sous le contrôle d'un second exploitant, de télécharger à tout moment ses moyens de pré-paiement. Par ailleurs, la procédure de téléchargement s'effectue d'une façon dynamique, en sécurité et sans coupure de communication le cas échéant.

Avantageusement, la demande de téléchargement du nombre prédéterminé d'unités de valeur s'effectue en dehors de la communication téléphonique, sur demande de l'abonné.

En variante, la demande de téléchargement du nombre prédéterminé d'unités de valeur s'effectue pendant la communication téléphonique.

L'invention porte également sur un procédé de téléchargement sécurisé de moyens de pré-paiement articulé sur un mode de téléchargement du type mentionné ci-avant.

D'autres caractéristiques et avantages de l'invention apparaîtront à la lumière de la description détaillée ci-après et des dessins annexés sur lesquels :

- la figure 1 est un synoptique illustrant une installation radiotéléphonique selon l'invention ;

- les figures 2 et 3 sont des organigrammes illustrant la première partie de la procédure de téléchargement sécurisé selon l'invention ; et

- la figure 4 est un organigramme illustrant la seconde partie de la procédure de téléchargement et de son authentification selon l'invention.

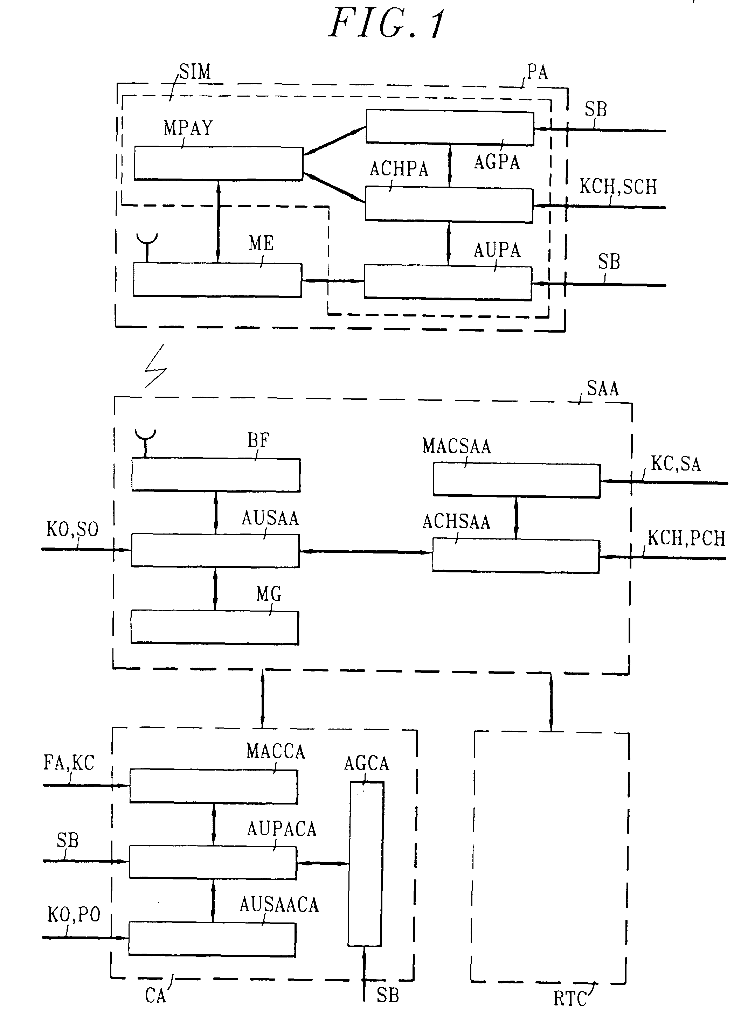

Sur la figure 1, une installation radiotéléphonique de type connu met en coopération un système d'accès d'abonnés téléphoniques mobiles et autonomes SAA avec une pluralité de postes autonomes mobiles ou fixes PA.

Le système d'accès SAA comprend une pluralité de stations de base BF, chacune reliée au réseau téléphonique commuté RTC.

Pour faciliter la compréhension de l'invention, seul un poste autonome PA et une station de base BF sont représentés sur la figure 1.

Chaque poste autonome comprend des moyen ME pour établir une intercommunication radiotéléphonique avec une station de base BF la plus proche.

Un centre d'autorisation CA connecté au système SAA supervise et contrôle, comme on le verra plus en détail ci-après, les communications entre le système d'accès et les postes autonomes.

Une installation de ce genre, qui trouve par exemple une application dans le GSM, est décrite dans la revue "L'ECHO DES RECHERCHES" No 131, premier trimestre 1988, pages 5 à 16, B. GHILLEBERT, P. COMBESCURE, A. MALOBERTI, ainsi que dans le No 139, premier trimestre 1990, pages 13 à 19, P. JOLIE, G. MAZZIOTTO dans la même revue.

En pratique, au niveau du système d'accès, il est prévu des moyens d'exploitation reliés à la station de base BF qui comprennent des moyens de taxation MG propres à calculer les taxes d'utilisation des services payants du réseau téléphonique commuté RTC.

De son côté, le poste autonome PA comprend des moyens de pré-paiement MPAY, rechargeables à distance et possédant une unité de traitement (non représentée) et une mémoire (non représentée) propre à contenir des unités de valeur destinées à payer les taxes d'utilisation calculées et transmises par les moyens de taxation.

En pratique, la mémoire est protégée contre l'écriture intempestive directe de données par le monde extérieur.

Avantageusement, dans l'application GSM, les moyens de pré-paiement MPAY sont logés dans un module d'identité d'abonnés amovible SIM qui coopère avec les moyens d'établissement ME d'intercommunication radiotéléphonique du poste autonome PA.

De préférence, la mémoire des moyens de pré-paiement MPAY est du type EPROM ou EEPROM, correctement protégée par la logique de l'unité de traitement du module SIM.

Le module SIM est logé dans une carte de type ISO standard.

En variante, le module SIM est un composant s'enfichant dans les moyens d'établissement d'intercommunications radiotéléphoniques ME.

Comme décrit dans la Demande de Brevet européen EP 0 480 833, il est prévu au niveau du poste autonome, des premiers moyens d'authentification-poste AUPA propres à établir une fonction d'authentification-poste A à l'aide d'une clé de base-poste prédéterminée SB et au niveau du centre d'autorisation CA, il est prévu des seconds moyens d'authentification-poste AUPACA propres à établir la fonction d'authentification-poste A à l'aide de ladite clé de base-poste SB.

Il est à remarquer que dans la Demande de Brevet susmentionnée, les premiers et seconds moyens d'authentification-poste AUPA et AUPACA servent à authentifier les taxes d'utilisation pendant l'intercommunication.

Dans l'application GSM, la clé de base-poste SB est par exemple une clé secrète, personnelle à chaque abonné et d'une longueur par exemple de 128 bits.

En ce qui concerne la fonction d'authentification-poste A, elle est par exemple une fonction cryptographique du type DES pour DATA ENCRYPTION STANDARD.

De façon connue, le système d'accès SAA est également muni de premiers moyens de chiffrement/déchiffrement MACSAA qui établissent une fonction cryptographique AC ou FC à l'aide d'une clé de stockage KC ou FA.

En symétrie, le centre d'autorisation CA est muni de seconds moyens de chiffrement/déchiffrement MACCA qui établissent la fonction cryptographique AC ou FC à l'aide de la clé de stockage KC ou FA.

Comme mentionné ci-avant, le but de l'invention est de fournir une procédure de téléchargement sécurisée des moyens de pré-paiement.

Pour atteindre ce but, l'installation selon l'invention est complétée au niveau du poste autonome PA de premiers moyens générateurs AGPA propres à établir une fonction de génération AG à l'aide de la clé de base-poste SB et de premiers moyens de téléchargement ACHPA propres à établir une fonction de téléchargement ACH ou FCH, à l'aide d'une clé de téléchargement KCH ou PCH qui est le transformé de la fonction de génération AG à l'aide de la clé de base-poste SB.

Par symétrie, au niveau du système d'accès SAA, l'installation est complétée par de seconds moyens de téléchargement ACHSAA propres à émettre un nombre prédéterminé d'unités de valeur n et à établir la fonction de téléchargement ACH à l'aide de la clé de téléchargement KCH ou PCH et de premiers moyens d'authentification-système AUSAA propres à établir une fonction d'authentification-système AO ou FO à l'aide d'une clé de base-système prédéterminée KO ou SO.

Egalement par symétrie, le centre d'autorisation CA comprend en outre selon l'invention des seconds moyens générateurs AGCA propres à établir la fonction de génération AG à l'aide de la clé de base-poste SB et de seconds moyens d'authentification-système AUSAACA propres à établir la fonction d'authentification-système AO ou FO à l'aide de la clé de base-système KO ou PO.

En pratique, les fonctions d'authentification-système AO ou FO d'authentification-poste A, cryptographique AC ou FC, de téléchargement ACH ou FCH et de génération AG sont articulées autour d'algorithmes cryptographiques qui peuvent être "DES" (DATA ENCRYPTION STANDARD) ou "RSA" (RIVEST SHAMIR ADLEMAN).

Ces algorithmes DES ou RSA sont stockés dans des mémoires mortes.

Il est à rappeler ici que l'algorithme cryptographique DES fonctionne à partir d'une clé de base secrète. Aussi, pour que les éléments de l'installation puissent dialoguer à l'aide de DES, il est nécessaire que la clé secrète soit stockée à la fois dans les deux éléments en dialogue.

Par contre, l'algorithme RSA fonctionne à l'aide d'une clé de base qui est en fait la combinaison de deux clés dépendantes l'une de l'autre, l'une étant une clé publique stockée dans l'un des deux éléments en dialogue et l'autre étant une clé secrète stockée dans l'autre des deux éléments.

Par exemple, dans le cas où la fonction d'authentification-système AO est articulée autour d'un algorithme DES, une clé de base-système secrète KO est stockée à la fois au niveau du système SAA dans les moyens AUSAA et au niveau du centre d'autorisation CA dans les moyens AUSAACA.

Ainsi, le transformé RESS d'un nombre aléatoire S par la fonction d'authentification-système AO à l'aide de la clé de base-système secrète KO s'écrit de la façon suivante :

$$RESS = AO\ (KO, S)$$

Par contre, dans le cas où la fonction d'authentification-système FO est articulée autour d'un algorithme RSA, un clé de base-système secrète SO est stockée seulement au niveau du système d'accès AUSAA tandis qu'une clé de base-système publique PO est stockée au niveau du centre d'autorisation CA. Ainsi, le transformé RESS d'un nombre aléatoire S par la fonction d'authentification-système FO à l'aide de la clé secrète SO s'écrit de la façon suivante :

$$RESS = SO\ (S)$$

tandis qu'au niveau du centre d'autorisation, les moyens d'authentification-système AUSAACA calculent le transformé du mot RESS par la fonction d'authentification-système FO à l'aide de la clé de base-système publique PO;

La vérification de l'authenticité du système d'accès SAA s'écrie alors de la façon suivante :

$$PO\ (RESS) = ?\ (S)$$

Les formules ci-avant serviront dans la description détaillée ci-après de la procédure de téléchargement selon l'invention.

Les algorithmes cryptographiques RSA ou DES sont des algorithmes vendus dans le commerce.

La procédure de téléchargement sécurisée selon l'invention se décompose en deux parties.

La première partie consiste en une étape de négociation entre le système d'accès visité et le centre d'autorisation chargé de la gestion des moyens de pré-paiement.

En bref, il s'agit d'une authentification du poste autonome ainsi que du système d'accès vis-à-vis du centre d'autorisation. Une fois que l'authenticité du poste autonome et du système d'accès sont contrôlées, le centre d'autorisation fournit au système d'accès une clé de téléchargement temporaire qui va permettre au système d'accès de s'authentifier vis-à-vis des moyens de pré-paiement.

La seconde partie intervient ensuite entre le système d'accès et les moyens de pré-paiement pour télécharger de façon sécurisée un nombre prédéterminé d'unités de valeur.

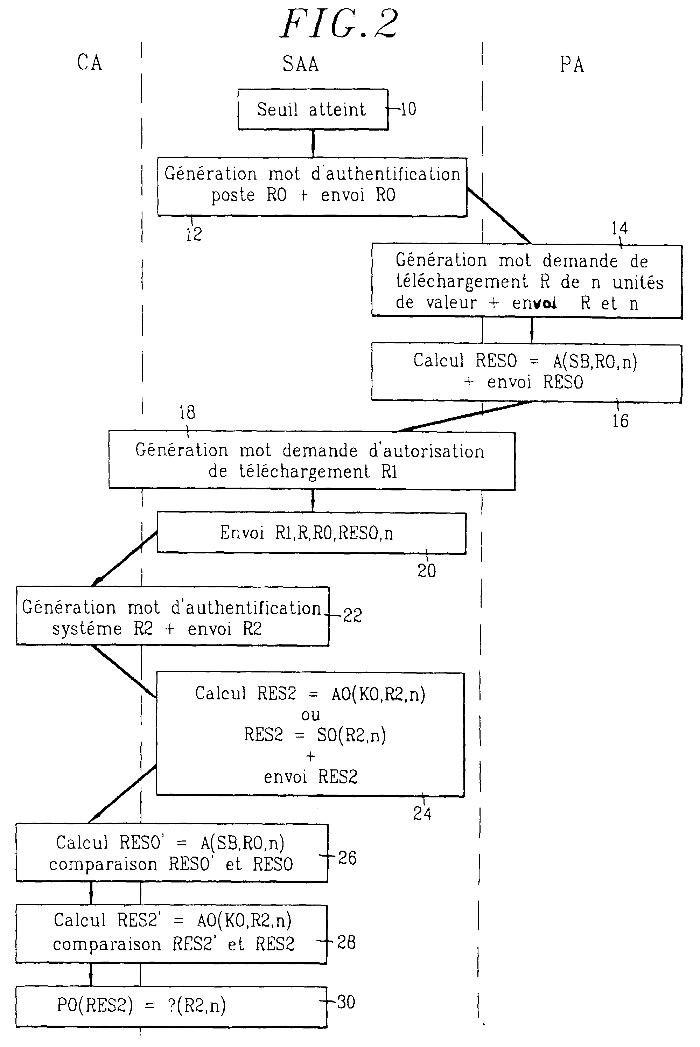

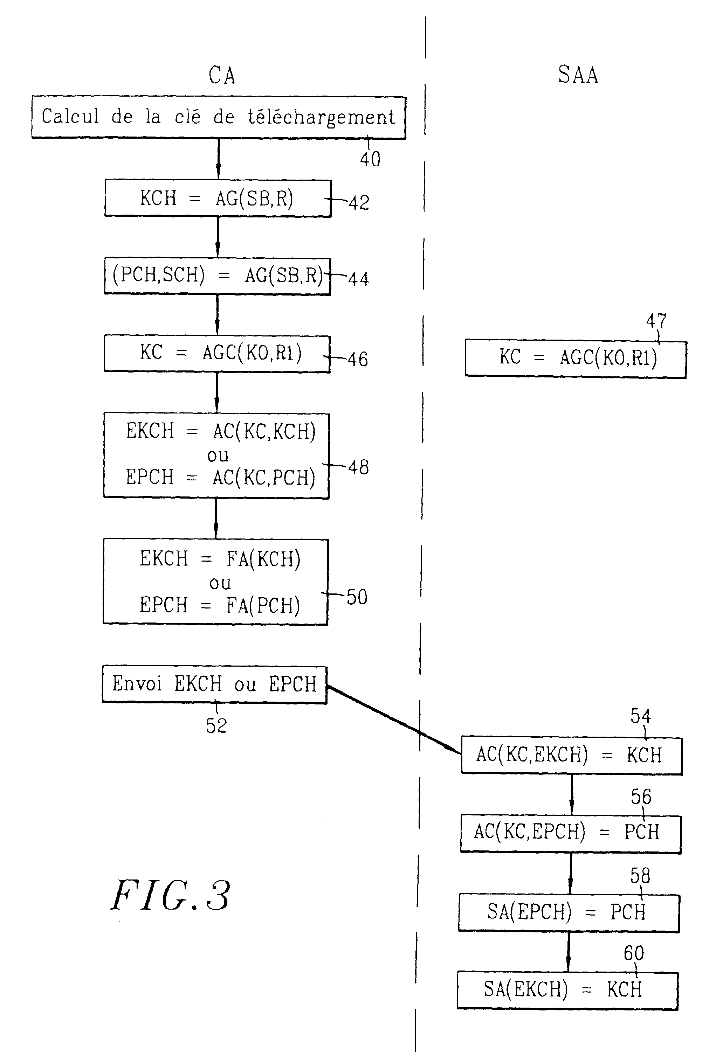

En référence aux figures 2 et 3, il est maintenant décrit de façon détaillée la première partie de la procédure de téléchargement selon l'invention.

En pratique, pour les moyens de pré-paiement MPAY, le système d'accès SAA visité dispose lors de l'intercommunication, du crédit disponible (nombre d'unités et unité monétaire utilisée).

Par exemple, lorsque cette valeur atteint ou dépasse un certain seuil (étape 10) le système d'accès génère un mot d'authentification-poste R0 (étape 12) et envoie ce mot d'authentification-poste R0 au poste autonome.

En réponse à ce mot d'authentification-poste R0, le poste autonome est face à plusieurs solutions.

En premier lieu, les moyens de pré-paiement appartiennent au système d'accès. Dans ce cas, le système d'accès possède les informations nécessaires pour télécharger lesdits moyens de pré-paiement.

En second lieu, les moyens de pré-paiement appartiennent à un centre d'autorisation pour lequel le système d'accès est habilité. Ce système d'accès possède donc les informations nécessaires au téléchargement des moyens de pré-paiement.

En troisième lieu, les moyens de pré-paiement appartiennent à un centre d'autorisation pour lequel le système d'accès visité n'est pas habilité. Le système d'accès ainsi visité doit donc s'adresser à l'autorité émettrice des moyens de pré-paiement pour avoir les informations nécessaires au téléchargement.

C'est dans la troisième situation qu'intervient la procédure de téléchargement selon l'invention qui nécessite la mise en place :

- d'un mécanisme d'authentification réciproque entre le système d'accès et le centre d'autorisation ;

- d'un mécanisme de confidentialité des informations secrètes échangées; et

- d'un mécanisme de non répudiation.

Ainsi, dans le cas où les moyens de pré-paiement appartiennent à une autorité pour laquelle le système d'accès visité n'est pas habilité, le poste autonome étant averti d'un dépassement de seuil au niveau du crédit des moyens de pré-paiement, les moyens de pré-paiement effectuent une demande de téléchargement de n unités de valeur qui consiste à générer un nombre aléatoire appelé encore mot-demande de téléchargement R (étape 14) et renvoie ce mot aléatoire R vers le système d'accès SAA.

Ensuite, lors de l'étape 16, les premiers moyens d'authentification-poste calculent le transformé RESO du mot d'authentification-poste R0 par la fonction d'authentification-poste A à l'aide de la clé de base-poste SB. Le nombre d'unités de valeur demandé n participe également au calcul de ce transformé RESO.

A l'issue de l'étape 16, il est envoyé vers le système d'accès SAA le mot-demande de téléchargement R, le transformé RESO et le nombre d'unités de valeur n.

En réponse aux mots R, RESO et n, le système d'accès effectue une demande d'autorisation de crédit (étape 18). Cette demande d'autorisation de crédit consiste à générer un mot de demande d'autorisation de crédit R1 et à envoyer les mots R1, R, R0, RESO et n (étape 20) vers le centre d'autorisation CA.

En réponse à ces mots, le centre d'autorisation effectue une demande d'authentification-système (étape 22) qui consiste en la génération d'un mot d'authentification-système R2 et l'envoi de ce mot d'authentification-système R2 vers le système d'accès SAA.

L'authentification mutuelle entre le système d'accès et le centre d'autorisation a pour acteurs les premiers et seconds moyens d'authentification-système AUSAA et AUSAACA (étapes 22, 24, 26).

Dans l'étape 24, la fonction d'authentification-système peut être articulée autour d'un algorithme cryptographique de type DES. Il s'effectue alors le calcul du transformé RES2 du mot R2 par la fonction d'authentification-système AO à l'aide de la clé de base-système secrète KO.

Par contre, dans le cas où les moyens d'authentification-système sont articulés autour d'un algorithme cryptographique du type RSA, les moyens d'authentification-système effectuent alors le calcul du transformé RES2 du mot d'authentification-système R2 à l'aide de la clé secrète SO stockée au niveau du système SAA.

Il est à remarquer que dans l'étape 24, le nombre d'unités de valeur n participe aussi au calcul du transformé RES2.

Enfin, à l'issue de l'étape 24, le système d'accès SAA envoie le transformé RES2 vers le centre d'autorisation.

Au niveau du centre d'autorisation CA, il est procédé au contrôle de l'authentification du poste PA ainsi que de l'authentification du système SAA.

En ce qui concerne le contrôle de l'authentification du poste, il est procédé au calcul du transformé RES0' par la fonction d'authentification-poste A à l'aide de la clé de base-poste SB (étape 26) et à la comparaison du transformé ainsi calculé RES0' et du transformé RESO ainsi reçu.

En ce qui concerne le contrôle de l'authentification-système, il est procédé au calcul du transformé RES2' par la fonction d'authentification-système AO à l'aide de la clé KO (étape 28) et à la comparaison du transformé ainsi calculé RES2' et du transformé RES2 ainsi reçu. L'étape 28 intervient dans le cas où les moyens d'authentification-système sont basés sur un algorithme de type DES.

Par contre, dans le cas où les moyens d'authentification-système sont articulés autour d'un algorithme RSA, il est calculé lors de l'étape 30 au déchiffrement du transformé RES2 par la clé publique PO stockée au niveau du centre d'autorisation pour vérifier l'authentification du mot-système R2.

En cas d'authenticité vérifiée du poste autonome et du système, il est procédé au calcul de la clé de téléchargement (étape 40). Dans le cas où la clé de téléchargement est une clé secrète d'un algorithme de type DES, la clé de téléchargement KCH est le transformé du mot demande de crédit R par la fonction de génération AG à l'aide de la clé SB (étape 42).

Par contre, dans le cas d'un algorithme du type RSA, la fonction de génération AG à l'aide de la clé SB permet d'obtenir un couple de clés constitué d'une clé publique PCH et d'une clé secrète SCH désigné par (PCH, SCH) (étape 44). La clé publique PCH est stockée au niveau du système d'accès SAA.

Une fois que la clé de téléchargement KCH ou PCH est générée au niveau du centre d'autorisation, il convient alors de transmettre cette clé de téléchargement KCH, ou la partie publique PCH de cette clé de téléchargement le cas échéant, chiffrée à l'intention du système d'accès.

Le chiffrement de la clé de téléchargement KCH ou PCH peut être effectué soit à l'aide d'un algorithme cryptographique du type DES, soit à l'aide d'un algorithme cryptographique de type RSA.

Dans le cas d'un algorithme cryptographique du type DES, il convient de disposer d'une clé de stockage KC au niveau du centre d'autorisation CA et du système d'accès SAA.

Par exemple, la clé de stockage KC est le transformé du mot R1 par la fonction cryptographique AGC à l'aide de la clé de base-système KO (étapes 46 et 47).

Le chiffrement EKCH de la clé de téléchargement KCH (étape 48) s'effectue alors par la fonction cryptographique AC à l'aide de la clé de stockage secrète KC ainsi disponible au niveau du système d'accès SAA et du centre d'autorisation CA.

En variante, le chiffrement EPCH de la clé de téléchargement PCH s'effectue alors par la fonction cryptographique AC à l'aide de la clé de stockage secrète KC.

Par contre, dans le cas d'un algorithme de chiffrement/déchiffrement du type RSA, il convient de disposer au niveau du centre d'autorisation CA d'une clé publique FA un niveau du système d'accès SAA d'une clé secrète SA.

Le chiffrement EKCH de la clé de téléchargement KCH (étape 50) s'effectue alors à l'aide de la clé publique FA.

En variante, le chiffrement EPCH de la clé de téléchargement PCH s'effectue alors à l'aide de la clé publique FA.

Une fois chiffrée, la clé EKCH ou EPCH (étape 52) est envoyée à l'intention du système d'accès SAA qui de son côté va déchiffrer ladite clé ainsi reçue chiffrée.

En corollaire des moyens de chiffrement/déchiffrement mis en place, il est procédé au déchiffrement de la clé KCH ou de la clé PCH le cas échéant selon les formules décrites dans les étapes 54, 56, 58 et 60.

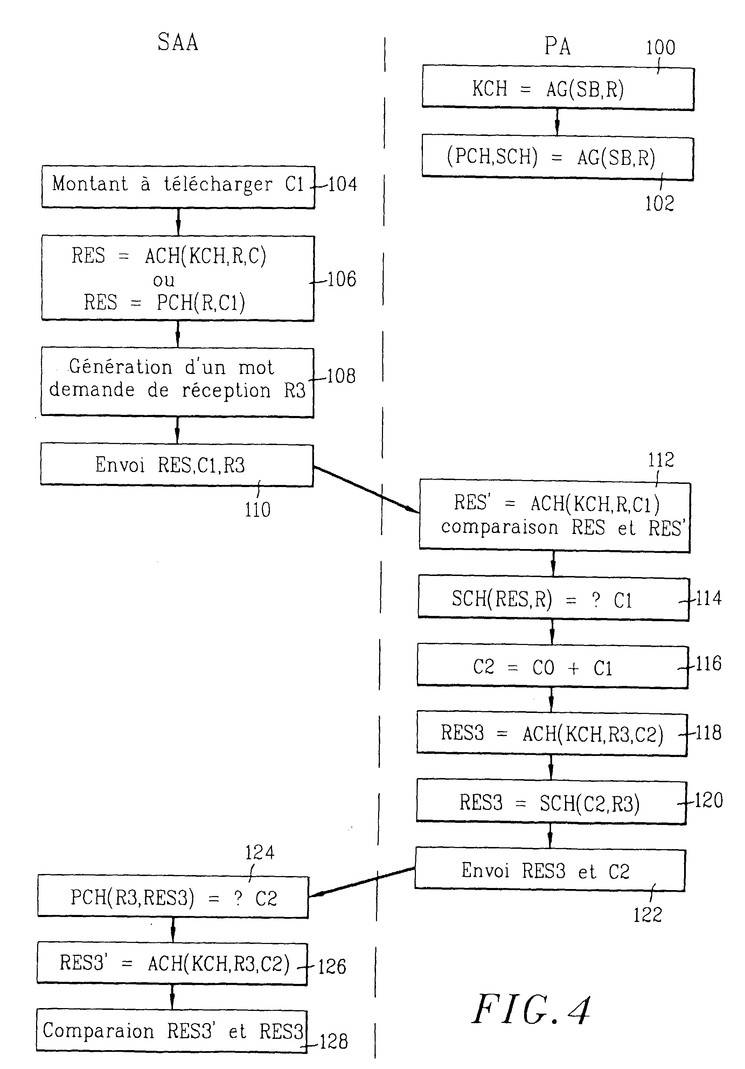

Il est maintenant fait référence à la figure 4 pour la seconde partie de la procédure de téléchargement des moyens de pré-paiement.

Le téléchargement a lieu entre les moyens de taxation du système d'accès SAA responsable du téléchargement des moyens de pré-paiement et le poste autonome PA.

Comme on l'a vu plus en détail ci-avant, le système d'accès SAA dispose de la fonction de téléchargement ACH ainsi que de la clé de téléchargement temporaire KCH ou PCH.

A l'issue des étapes d'authentification du poste autonome ainsi que du système d'accès et de la génération de la clé KCH ou (PCH, SCH) et de son envoi chiffré au niveau du système d'accès et dudit déchiffrement de cette clé, il est enfin procédé à la procédure de téléchargement des moyens de pré-paiement.

Il convient de remarquer que le poste autonome dispose aussi de façon intrinsèque de la clé de téléchargement KCH ou (PCH, SCH) (étapes 100, 102).

Le système d'accès SAA établit le montant à télécharger C1 (étape 104) en fonction du nombre d'unités de valeur n demandé.

Le système d'accès calcule le transformé RES de la demande de téléchargement R dépendant du montant C1 avec la fonction de téléchargement ACH ou SCH à l'aide de la clé KCH ou de la clé publique PCH (étape 106).

Il convient de remarquer que la fonction de téléchargement ACH est articulée autour d'un algorithme de type RSA (PCH, SCH) ou autour d'un algorithme du type DES (clé secrète KCH).

Après le calcul du transformé RES par la fonction ACH, le système d'accès SAA génère un mot aléatoire demande de réception R3 (étape 108) et envoie le transformé RES, le montant C1 et ledit mot aléatoire R3 (étape 110) à l'intention du poste autonome PA.

De son côté, le poste autonome va vérifier la signature du système SAA en calculant le transformé RES' dans le cas d'un algorithme du type DES (étape 112), ou bien le transformé de RES et du mot R par la clé de téléchargement secrète SCH dans le cas d'un algorithme de type RSA (étape 114).

En cas d'authenticité du système SAA, il est procédé au calcul du nouveau crédit C2 (étape 116).

Les moyens de pré-paiement signent alors le nouveau crédit C2 avec la clé KCH et le mot aléatoire R3 (étape 118), ou bien avec la clé SCH et ledit mot aléatoire R3 selon l'algorithme cryptographique choisi (étape 120).

Enfin, lors de l'étape 122, il est procédé à l'envoi du nouveau crédit C2 et du transformé RES3.

De son côté, le système d'accès vérifie l'authenticité de la réception du téléchargement en procédant au calcul de RES3' dans le cas d'un algorithme de type DES (étapes 126 et 128) et en vérifiant l'authenticité du transformé RES3 par l'intervention de l'algorithme de type RSA (étape 124).

Avantageusement, avant l'échange du mot-demande de téléchargement R et de son transformé RES, les moyens d'authentification-système AUSAA et AUSAACA échangent le mot d'authentification-autorisation(étape 118, figure 2) et son transformé RES1 par la fonction d'authentification-système KO, SO, en vue d'authentifier l'autorisation de l'ordre de téléchargement.

La non répudiation entre le système d'accès et le centre d'autorisation est garantie par le principe d'utilisation de la clé de téléchargement temporaire KCH ou (PCH, SCH). Ainsi, l'autorité gestionnaire ne peut pas nier avoir autoriser un téléchargement, car elle est la seule capable de fournir ladite clé de téléchargement qui a servi pour l'opération de téléchargement.

D'un autre côté, le système d'accès ne peut pas prétendre avoir reçu des autorisations de téléchargement sachant que celles-ci ne sont effectives que lorsqu'elles sont associées à ladite clé de téléchargement.

Avantageusement, dans l'application GSM, les moyens de téléchargement ACHPA et les moyens de génération AGPA sont logés dans le module d'identité d'abonnés amovible SIM.

La mise en oeuvre de l'invention dans le cas d'une application GSM qui utilise un module d'identité d'abonnés SIM nécessite la présence, dans ce module, d'une application pré-payée.

Cette application pré-payée requiert un fichier de lecture libre et une mise à jour protégée par la présentation de la clé de téléchargement KCH ou (PCH, SCH).

Il est à remarquer que cette clé de téléchargement KCH ou (PCH, SCH) est temporaire et permet à une autorité visitée d'écrire dans le fichier pré-payé une valeur qui représente la valeur du crédit à ajouter dans la mémoire du module SIM.

Dans une application GSM avec l'usage d'un module SIM, les moyens d'établissement d'intercommunication radiotéléphoniques ME transmettent au module d'identité d'abonnés SIM en cours de communication une proposition de téléchargement RO comme décrit ci-avant et par la suite le mot C1 contenant le montant à télécharger certifié avec la clé de téléchargement temporaire KCH ou (PCH, SCH).

Dans le cas d'une application GSM, les premiers moyens de téléchargement et de génération sont dans le module SIM.

Le système d'accès SAA se trouve au niveau du VLR pour "VISITOR LOCATION REGISTER" et l'autorité CA se trouve au niveau du HLR pour "HOME LOCATION REGISTER" si le module est émis par un opérateur de réseau de radiocommunications.

Au niveau du réseau téléphonique commuté, le module SIM porteur de l'application pré-payée est identifié par un numéro d'identité d'abonné IM qui se réfère à un enregistreur nominal de localisation.

En cours de communication, le module SIM se trouve alors localisé au niveau de l'enregistreur VLR.

Selon l'invention, c'est donc l'enregistreur VLR qui s'occupe de débiter les taxes d'utilisation du module SIM.

Il est à remarquer que l'enregistreur VLR connaît le crédit des moyens de pré-paiement restant à tout moment.

Ainsi, lorsque ce crédit atteint un seuil donné, l'enregistreur VLR informe le module SIM en lui proposant le téléchargement.

En réponse à cette information, le SIM engendre le nombre aléatoire R qui permet d'authentifier le module SIM d'un façon active et lui demandant de générer une clé de rechargement temporaire KCH, ou (PCH, SCH), comme décrit en référence aux figures 2 et 3.

En parallèle, l'enregistreur VLR s'authentifie vis-à-vis de l'enregistreur HLR et lui demande la clé de téléchargement temporaire.

C'est cette clé de téléchargement qui est utilisée ensuite pour contrôler l'opération de téléchargement entre le VLR et le SIM.

A titre d'exemple, les mots R, R0, R1, R2, R3 sont des mots aléatoires de 128 bits. Les valeurs à télécharger et le montant disponible sur le module pré-payé C1 et C2 s'étendent sur 4 bits.

Le mot-clé RES0 est de 32 bits.

Les mots-clés RES, RES1, RES2 et RES3 sont des mots de 128 bits.

Les clés KO et KC sont des clés de 128 bits, tandis que la clé de téléchargement KCH, (PCH ou SCH) peut varier de 64 bits à 512 bits selon le type de l'algorithme cryptographique choisi.

Il convient de remarquer que l'invention ne se limite pas à une intercommunication du type radioélectrique entre le poste autonome et le système d'accès.

En effet, elle concerne tout réseau de communication. Ainsi, elle peut s'appliquer aux installations mettant en place :

- un poste autonome personnel mobile ou fixe avec une liaison radioélectrique avec le système d'accès ;

- un poste autonome public publiphone fixe avec une liaison filaire ou radioélectrique avec le système d'accès ; ou

- un poste autonome personnel mobile ou fixe avec une liaison filaire avec le système d'accès.

Cette application générale à tout réseau de communication s'explique par le fait que le mode de téléchargement selon l'invention n'est pas affecté par les différences de liaison entre le poste autonome et le système d'accès.

En pratique, dans le cas d'une installation radiotéléphonique (figures 1 à 4), le module d'intercommunication du poste autonome ME est un module radio qui dialogue avec une station de base BF du système d'accès SAA.

Par contre, pour une installation téléphonique de type filaire, le module d'intercommunication du poste autonome ME est un module filaire qui dialogue avec une station de base constituée d'une unité de raccordement du réseau téléphonique, (par exemple une unité de raccordement des publiphones URP ou un commutateur local).

Il est à remarquer que la procédure de téléchargement selon l'invention se marie bien au service connu sous la désignation anglo-saxonne UPT pour "Universal Personal Telecommunication".

Plus précisément, ce service permet d'offrir aux abonnés des possibilités de mobilité personnelle à travers plusieurs réseaux de communication offrant ce service grâce au fait notamment que chaque abonné est connu par un numéro d'identification personnel unique. Ainsi, lors de ses déplacement dans un réseau de communication du type filaire, l'abonné dispose de fonctions d'enregistrement permettant d'indiquer sa localisation au centre d'utilisation, à tout moment.

Il en résulte que la procédure de téléchargement décrite en référence aux figures 1 à 4 complète avantageusement le service UPT pour des applications prépayées.

Il est à remarquer aussi que la procédure de téléchargement selon l'invention s'applique également aux réseaux filaires dépourvus du service UPT. Par exemple, dans le cadre de la télécarte, des accords peuvent exister entre des premier et second opérateurs afin de permettre l'accès d'une télécarte gérée ou émise par le premier opérateur au réseau de communication géré par le second opérateur et réciproquement.

**Revendications**

1. Installation de télécommunication comprenant :

   - au moins un réseau téléphonique commuté (RTC) ;

   - un système d'accès d'abonnés téléphoniques autonomes (SAA) comprenant :

      . au moins une station de base (BF) reliée au réseau téléphonique commuté ;

      . des moyens d'exploitation reliés à la station de base comprenant des moyens de taxation (MG) propres à calculer les taxes d'utilisation des services payants du réseau téléphonique commuté (RTC) ;

      . des premiers moyens de chiffrement/déchiffrement (MACSAA) propres à établir une fonction cryptographique (AC ou SA) à l'aide d'une clé de stockage (KC ou SA) ;

   - au moins un poste autonome (PA) comprenant :

      . des moyens (ME) propres à établir une intercommunication avec la station de base (BF) ;

   . des moyens de pré-paiement (MPAY) propres à contenir des unités de valeur destinées à payer les taxes d'utilisation calculées et transmises par les moyens de taxation ;

   . des premiers moyens d'authentification-poste (AUPA) propres à établir une fonction d'authentification (A) à l'aide d'une clé de base-poste prédéterminée (SB) personnelle à chaque abonné ;

   - un centre d'autorisation (CA) comprenant :

      . des seconds moyens de chiffrement/déchiffrement (MACCA) propres à établir la fonction de chiffrement/déchiffrement (AC ou FC) à l'aide de la clé de stockage (KC ou FA) ;

      . des seconds moyens d'authentification-poste (AUPACA) propres à établir la fonction d'authentification-poste (A) à l'aide de la clé de base-poste (SB) ;

caractérisée en ce que le poste autonome (PA) comprend en outre :

   - des premiers moyens générateurs (AGPA) propres à établir une fonction de génération (AG) à l'aide de la clé de base-poste (SB) ;

   - des premiers moyens de téléchargement (ACHPA) propres à établir une fonction de téléchargement (ACH ou SCH) à l'aide d'une clé de téléchargement (KCH ou SCH) qui est le transformé d'un mot prédéterminé par la fonction de génération (AG) à l'aide de la clé de base-poste (SB) ;

en ce que le système d'accès (SAA) comprend en outre :

   - des premiers moyens d'authentification-système (AUSAA) propres à établir une fonction d'authentification-système (AO ou FO) à l'aide d'une clé de base-système prédéterminée (KO ou SO) ;

   - des seconds moyens de téléchargement (ACHSAA) propres à émettre un nombre prédéterminé d'unités de valeur et à établir la fonction de téléchargement (ACH ou FCH) à l'aide de la clé de téléchargement (KCH ou PCH) ;

en ce que le centre d'autorisation (CA) comprend :

- des seconds moyens d'authentification-système (AUSAACA) propres à établir la fonction d'authentification-système (AO ou FO) à l'aide de la clé de base-système (KO ou PO) ; et

- des seconds moyens générateurs (AGCA) propres à établir la fonction de génération (AG ou FG) à l'aide de la clé de base-poste (SB) ; et

en ce que l'installation comprend en outre des moyens permettant de mettre en oeuvre un mode de téléchargement dans lequel en réponse à un mot-demande de téléchargement (R) d'un nombre prédéterminé d'unités de valeur émanant du poste autonome (PA), les premiers et seconds moyens d'authentification-poste (AUPA et AUPACA) ainsi que les premiers et seconds moyens d'authentification-système (AUSAA et AUSAACA) sont disposés de façon à mettre en oeuvre une authentification active respective du poste autonome ainsi que du système d'accès, avec des moyens permettant d'échanger respectivement un mot d'authentification-poste (R0) émanant du système d'accès et le transformé (RES0) de ce mot par la fonction d'authentification-poste (A) à l'aide de la clé de base-poste (SB) ainsi que d'échanger un mot d'authentification-système (R2) émanant du centre d'autorisation (CA) et le transformé (RES2) de ce mot par la fonction d'authentification-système (AO ou FO) à l'aide de la clé de base-système (KO ou SO) ;

- en ce qu'en cas d'authenticité contrôlée du système d'accès et du poste autonome, les seconds moyens générateurs (AGCA) sont aptes à calculer la clé de téléchargement (KCH ou (SCH,PCH)) au niveau du centre d'autorisation (CA), la clé de téléchargement étant le transformé du mot-demande de téléchargement par la fonction génération (AG) à l'aide de la clé de base-poste (SB) ;

- en ce qu'en cas de génération de la clé de téléchargement au niveau du centre d'autorisation, les seconds moyens de chiffrement/déchiffrement (MACCA) sont aptes à transmettre la clé de chargement chiffrée (EKCH ou EPCH) à l'aide de la clé de stockage (KC ou FA) aux premiers moyens de chiffrement/déchiffrement (MACSAA) qui la déchiffrent en vue de la stocker au niveau du système d'accès (SAA) et

en cas de stockage de la clé de téléchargement dans le système d'accès (SAA), les premiers et seconds moyens de téléchargement (ACHSAA et ACHPA) sont aptes à échanger le mot-demande de téléchargement (R) du nombre d'unités de valeur à télécharger (n) ainsi que le transformé (RES) dudit mot-demande de téléchargement par la fonction de téléchargement (ACH ou FCH) à l'aide de la clé de téléchargement (KCH ou (SCH,PCH)) en vue de télécharger de façon sécurisée les moyens de pré-paiement dudit nombre d'unités de valeur (n).

2. Installation selon la revendication 1, caractérisée en ce qu'avant l'échange du mot-demande de téléchargement (R) et de son transformé (RES), les premiers et seconds moyens (AUSAA et AUSAACA) d'authentification-système échangent un mot d'authentification-autorisation (R1) et son transformé (RES1) par la fonction d'authentification-système (AO ou FO) à l'aide de la clé d'authentification-système (KO ou (PO,SO) en vue d'authentifier l'autorisation de l'ordre de téléchargement.

3. Installation selon la revendication 1 ou la revendication 2, caractérisée en ce que simultanément à l'échange du mot-demande de téléchargement (R) et de son transformé (RES), les premiers et seconds moyens de téléchargement (ACHSAA et ACHPA) échangent un mot d'authentification-réception (R2) et son transformé (RES2) par la fonction de téléchargement (ACH ou FCH)) à l'aide de la clé de téléchargement (KCH ou (PCH,SCH)) en vue d'authentifier la réception de l'ordre de téléchargement.

4. Installation selon l'une des revendications précédentes, caractérisée en ce que les fonctions d'authentification-poste (A), d'authentification-système (AO, FO), de chiffrement/déchiffrement (AC, FC), de génération (AG) ou de téléchargement (ACH ou FCH) sont des algorithmes cryptographiques de type DES ou RSA.

5. Installation selon l'une quelconque des revendications 1 à 4, caractérisée en ce que la procédure de téléchargement des moyens de pré-paiement (MPAY) intervient en temps réel durant la communication.

6. Installation selon l'une quelconque des revendications 1 à 4, caractérisée en ce que la procédure de téléchargement des moyens de pré-paiement (MPAY) intervient avant l'établissement d'appel, sur demande de l'abonné ou à l'initiative du réseau.

7. Installation selon l'une quelconque des revendications précédentes, caractérisée en ce que les moyens de pré-paiement (MPAY), les premiers moyens de téléchargement (ACHPA), les premiers moyens de génération (AGPA) et les premiers moyens d'authentification du poste (AUPA) sont logés dans un module d'identité d'abonné (SIM) amovible propre à coopérer avec les moyens d'établissement (ME) d'intercommunication.

8. Installation selon l'une quelconque des revendications précédentes, caractérisée en ce que le module d'identité d'abonné SIM comprend une mémoire protégée contre l'écriture intempestive directe des données par le monde extérieur et propre à contenir des unités de valeur et une unité de traitement propre à payer les taxes d'utilisation à l'aide desdites unités de valeur et à recharger la mémoire à l'aide des unités de valeur téléchargées.

9. Installation selon l'une quelconque des revendications précédentes, caractérisée en ce que le module d'identité d'abonnés (SIM) est logé dans une carte de type ISO standard et en ce que les moyens d'établissement d'intercommunication (ME) comprennent un lecteur pour la lecture de ladite carte.

10. Installation selon l'une quelconque des revendications 1 à 8, caractérisée en ce que le module d'identité d'abonné comprend une interface mécanique propre à s'enficher dans les moyens d'établissement d'intercommunication (ME).

11. Installation selon l'une quelconque des précédentes revendications, caractérisée en ce que l'intercommunication entre le poste autonome et la station de base est radioélectrique ou filaire.

12. Installation selon l'une quelconque des précédentes revendications, caractérisée en ce que le poste autonome est mobile ou fixe, personnel ou public.

13. Procédé de téléchargement sécurisé de moyens de pré-paiement comprenant les étapes suivantes :

- a) prévoir au moins un réseau téléphonique commuté (RTC) ;

- b) prévoir un système d'accès d'abonnés téléphoniques autonomes (SAA) avec au moins une station de base (BF) reliée au réseau téléphonique commuté et des moyens d'exploitation reliés à la station de base pour calculer les taxes d'utilisation des services payants du réseau téléphonique commuté (RTC) par l'intermédiaire de moyens de taxation (MG) ;

- c) prévoir au moins un poste autonome (PA) ;

  - c1) pour établir une intercommunication avec la station de base (BF) ;
  - c2) pour contenir des unités de valeur destinées à payer les taxes d'utilisation calculées et transmises par les moyens de taxation à l'aide de moyens de pré-paiement (MPAY) ;

  - c3) pour établir une fonction d'authentification (A) à l'aide d'une clé de base-poste prédéterminée (SB) personnelle à chaque abonné à l'aide des premiers moyens d'authentification-poste (AUPA) ;

- d) prévoir un centre d'autorisation (CA) :

  - d1) pour établir la fonction de chiffrement/déchiffrement (AC ou FC) à l'aide de la clé de stockage (KC ou FA) par l'intermédiaire de seconds moyens de chiffrement/déchiffrement (MACCA) ;
  - d2) pour établir la fonction d'authentification-poste (A) à l'aide de la clé de base-poste (SB) par l'intermédiaire de seconds moyens d'authentification-poste (AUPACA) ;

caractérisé en ce qu'il comprend en outre les étapes suivantes :

- au niveau du poste autonome (PA), établir une fonction de génération (AG) à l'aide de la clé de base-poste (SB) par l'intermédiaire de premiers moyens générateurs (AGPA) ;

- établir une fonction de téléchargement (ACH ou FCH) à l'aide d'une clé de téléchargement (KCH ou SCH) qui est le transformé d'un mot prédéterminé par la fonction de génération (AG) à l'aide de la clé de base-poste (SB), par l'intermédiaire de premiers moyens de téléchargement (ACHPA) ;

- au niveau du système d'accès (SAA), établir une fonction d'authentification-système (AO ou FO) à l'aide d'une clé de base-système prédéterminée (KO ou SO), par l'intermédiaire de premiers moyens d'authentification-système (AUSAA) ;

- émettre un nombre prédéterminé d'unités de valeur et établir la fonction de téléchargement (ACH ou SCH) à l'aide de la clé de téléchargement (KCH ou PCH), par l'intermédiaire de seconds moyens de téléchargement (ACHSAA) ;

- au niveau du centre d'autorisation (CA), établir la fonction d'authentification-système (AO ou FO) à l'aide de la clé de base-système (KO ou PO), par l'intermédiaire de seconds moyens d'authentification système (AUSAACA) ; et

- établir la fonction de génération (AG) à l'aide de la clé de base-poste (SB), par l'intermédiaire de seconds moyens générateurs (AGCA) ;

en ce que le procédé comprend en outre une étape de téléchargement dans laquelle en réponse à un mot-demande de téléchargement (R) d'un nombre prédéterminé d'unités de valeur émanant du poste autonome (PA), les premiers et seconds moyens d'authentification-poste (AUPA et AUPACA) ainsi que les premiers et seconds moyens d'authentification-système (AUSAA et AUSAACA) procèdent à une authentification active respective du poste autonome ainsi que du système d'accès, en échangeant respectivement un mot d'authentification-poste (R0) émanant du système d'accès et le transformé (RES0) de ce mot par la fonction d'authentification-poste (A) à l'aide de la clé de base-poste (SB) ainsi qu'en échangeant un mot d'authentification-système (R2) émanant du centre d'autorisation (CA) et le transformé (RES2) de ce mot par la fonction d'authentification-système (AO ou FO) à l'aide de la clé de base-système (KO ou SO) ;

- en ce qu'en cas d'authentification contrôlée du système d'accès et du poste autonome, les seconds moyens générateurs (AGCA) calculent la clé de téléchargement (KCH, ou (SCH,PCH)) au niveau du centre d'autorisation (CA), la clé de téléchargement étant le transformé du mot-demande de téléchargement par la fonction de génération (AG) à l'aide de la clé de base-poste (SB) ;

- en ce qu'en cas de génération de la clé de téléchargement au niveau du centre d'autorisation, les seconds moyens de chiffrement/déchiffrement (MACCA) transmettent la clé de chargement chiffrée (EKCH ou EPCH) à l'aide de la clé de stockage (KC ou FA) aux premiers moyens de chiffrement/déchiffrement (MACSAA) qui la déchiffrent en vue de la stocker au niveau du système d'accès (SAA) et

en cas de stockage de la clé de téléchargement dans le système d'accès (SAA), les premiers et seconds moyens de téléchargement (ACHSAA et ACHPA) échangent le mot-demande de téléchargement (R) du nombre d'unités de valeur à télécharger (n) ainsi que le transformé (RES) dudit mot-demande de téléchargement par la fonction de téléchargement (ACH ou (FCH)) à l'aide de la clé de téléchargement (KCH ou (PCH,SCH)) en vue de télécharger de façon sécurisée les moyens de prépaiement dudit nombre d'unités de valeur (n).

14. Procédé selon la revendication 13, caractérisé en ce qu'avant l'échange du mot-demande de téléchargement (R) et de son transformé (RES), les premiers et seconds moyens (AUSAA et AUSAACA) d'authentification-système échangent un mot d'authentification-autorisation (R1) et son transformé (RES1) par la fonction d'authentification-système (AO ou FO)) à l'aide de la clé d'authentification-système (KO ou (SO,PO)) en vue d'authentifier l'autorisation de l'ordre de téléchargement.

15. Procédé selon la revendication 13 ou la revendication 14, caractérisé en que simultanément à l'échange du mot-demande de téléchargement (R) et de son transformé (RES), les seconds et premiers moyens de téléchargement (ACHSAA) et ACHPA) échangent un mot d'authentification-réception (R2) et son transformé (RES2) par la fonction de téléchargement (ACH ou FCH)) à l'aide de la clé de téléchargement (KCH ou (PCH,SCH)) en vue d'authentifier la réception de l'ordre de téléchargement.

**Patentansprüche**

1. Fernmeldeanlage, aufweisend:

- mindestens ein Fernsprechwahlnetz (RTC);

- ein System (SAA) für den Zugang von autonomen bzw. unabhängigen Fernsprechteilnehmern, aufweisend:

  . mindestens eine Basisstation (BF), die mit dem Fernsprechwahlnetz verbunden ist;

  . Betriebsmittel, die mit der Basisstation verbunden sind, die Gebührenberechnungsmittel (MG) aufweist, die geeignet sind, die Benutzungsgebühren der gebührenpflichtigen Dienste des Fernsprechwahlnetzes (RTC) zu berechnen;

  . erste Mittel (MACSAA) zur Chiffrierung/ Dechiffrierung, die geeignet sind, eine kryptographische Funktion (AC oder SA) mit Hilfe eines Speicherschlüssels (KC oder SA) einzustellen;

- mindestens ein autonomes bzw. unabhängiges Terminalgerät (PA), aufweisend:

  . Mittel (ME), die geeignet sind, eine Interkommunikation mit der Basisstation (BF) aufzubauen;

  . Vorausbezahlungsmittel (MPAY), die geeignet sind, Werteinheiten zu enthalten, die dazu bestimmt sind, die Benutzungsgebühren zu bezahlen, die durch die Gebührenberechnungsmittel berechnet und übertragen sind;

. erste Mittel (AUPA) zur Terminalgerät-Authentifizierung, die geeignet sind, eine Authentifizierungsfunktion (A) mit Hilfe eines vorbestimmten, für jeden Teilnehmer persönlichen Terminalgerät-Basisschlüssels (SB) einzustellen;

- ein Genehmigungszentrum (CA), aufweisend:

. zweite Mittel (MACCA) zur Chiffrierung/ Dechiffrierung, die geeignet sind, die Chiffrier-/Dechiffrierfunktion (AC oder FC) mit Hilfe des Speicherschlüssels (KC oder FA) einzustellen;

. zweite Mittel (AUPACA) zur Terminalgerät-Authentifizierung, die geeignet sind, die Terminalgerät-Authentifizierungsfunktion (A) mit Hilfe des Terminalgerät-Basisschlüssels (SB) einzustellen;

dadurch gekennzeichnet, daß
das autonome bzw. unabhängige Terminalgerät (PA) ferner aufweist:

- Erste Generierungsmittel (AGPA), die geeignet sind, eine Generierungsfunktion (AG) mit Hilfe des Terminalgerät-Basisschlüssels (SB) einzustellen;

- erste Fernlademittel (ACHPA), die geeignet sind, eine Fernladefunktion (ACH oder SCH) mit Hilfe eines Fernladeschlüssels (KCH oder SCH) einzustellen, der das Transformierte eines Worts ist, das durch die Generierungsfunktion (AG) mit Hilfe des Terminalgerät-Basisschlüssels (SB) vorbestimmt ist;

daß das Zugangssystem (SAA) ferner aufweist:

- Erste System-Authentifizierungsmittel (AUSAA), die geeignet sind, eine System-Authentifizierungsfunktion (AO oder FO) mit Hilfe eines vorbestimmten System-Basisschlüssels (KO oder SO) einzustellen;

- zweite Fernlademittel (ACHSAA), die geeignet sind, eine vorbestimmte Anzahl von Werteinheiten zu senden und die Fernladefunktion (ACH oder FCH) mit Hilfe des Fernladeschlüssels (KCH oder PCH) einzustellen;

daß das Genehmigungszentrum (CA) aufweist:

- Zweite System-Authentifizierungsmittel (AUSAACA), die geeignet sind, die System-Authentifizierungsfunktion (AO oder FO) mit Hilfe des System-Basisschlüssels (KO oder PO) einzustellen, und

- zweite Generierungsmittel (AGCA), die geeignet sind, die Generierungsfunktion (AG oder FG) mit Hilfe des Terminalgerät-Basisschlüssels (SB) einzustellen, und

daß die Anlage ferner Mittel aufweist, die gestatten, einen Fernlademodus auszuführen, in welchem in Beantwortung eines Fernladeanfrage-Worts (R) einer von dem unabhängigen Terminalgerät (PA) herrührenden, vorbestimmten Anzahl von Werteinheiten die ersten und zweiten Terminalgerät-Authentifizierungsmittel (AUPA und AUPACA) sowie die ersten und zweiten System-Authentifizierungsmittel (AUSAA und AUSAACA) derart angeordnet sind, daß eine jeweilige aktive Authentifizierung des unabhängigen Terminalgeräts sowie des Zugangssystems ausgeführt wird, mit Mitteln, die gestatten, jeweils ein Terminalgerät-Authentifizierungswort (R0) auszutauschen, das von dem Zugangssystem und dem Transformierten (RES0) dieses Worts durch die Terminalgerät-Authentifizierungsfunktion (A) mit Hilfe des Terminalgerät-Basisschlüssels (SB) herrührt, sowie ein System-Authentifizierungswort (R2) auszutauschen, das von dem Genehmigungszentrum (CA) und dem Transformierten (RES2) dieses Worts durch die System-Authentifizierungsfunktion (AO oder FO) mit Hilfe des System-Basisschlüssels (KO oder SO) herrührt.

- daß im Fall der kontrollierten Authentizität des Zugangssystems und des unabhängigen Terminalgeräts die zweiten Generierungsmittel (AGCA) geeignet sind, den Fernladeschlüssel (KCH oder (SCH, PCH)) auf der Ebene des Genehmigungszentrums (CA) zu berechnen, wobei der Fernladeschlüssel das Transformierte des Fernladeanfrage-Worts durch die Generierungsfunktion (AG) mit Hilfe des Terminalgerät-Basisschlüssels (SB) ist;

- daß im Fall der Generierung des Fernladeschlüssels auf der Ebene des Genehmigungszentrums die zweiten Chiffrier/Dechiffriermittel (MACCA) geeignet sind, den chiffrierten Ladeschlüssel (EKCH oder EPCH) mit Hilfe des Speicherschlüssels (KC oder FA) an die ersten Chiffrier/Dechiffriermittel (MACSAA) zu übertragen, die ihn dechiffrieren, um ihn auf der Ebene des Zugangssystems (SAA) zu speichern, und daß im Fall der Speicherung des Fernladeschlüssels in dem Zugangssystem (SAA) die ersten und zweiten Fernlademittel (ACHSAA und ACHPA) geeignet sind, das Fernladeanfrage-Wort (R) der Anzahl (n) fernzuladender Werteinheiten sowie das durch die Fernladefunktion (ACH oder FCH) mit Hilfe des Fernladeschlüssels (KCH oder (SCH, PCH)) Transformierte (RES) des Fernladeanfrage-Worts auszutauschen, um auf gesicherte Weise die Mittel zur Vorausbezahlung der Anzahl (n) von Werteinheiten fernzuladen.

2.  Anlage nach Anspruch 1,
    dadurch gekennzeichnet, daß
    vor dem Austausch des Fernladeanfrage-Worts (R) und seinem Transformierten (RES) die ersten und zweiten Mittel (AUSAA und AUSAACA) zur System-Authentifizierung ein Genehmigungs-Authentifizierungswort (RI) sowie sein durch die System-Authentifizierungsfunktion (AO oder FO) mit Hilfe des System-Authentifizierungsschlüssels (KO oder (PO, SO) Transformiertes (RES1) austauschen, um die Genehmigung des Fernladebefehls zu authentifizieren.

3.  Anlage nach Anspruch 1 oder Anspruch 2,
    dadurch gekennzeichnet, daß
    gleichzeitig mit dem Austausch des Fernladeanfrage-Worts (R) und seines Transformierten (RES) die ersten und zweiten Fernlademittel (ACHSAA und ACHPA) ein Empfangs-Authentifizierungswort (R2) und sein durch die Fernladefunktion (ACH oder FCH)) mit Hilfe des Fernladeschlüssels (KCH oder (PCH, SCH)) Transformiertes (RES2) austauschen, um den Empfang des Fernladebefehls zu authentifizieren.

4.  Anlage nach einem der vorhergehenden Ansprüche,
    dadurch gekennzeichnet, daß
    die Funktionen zur Terminalgerät-Authentifizierung (A), zur System- Authentifizierung (AO, FO), zur Chiffrierung/Dechiffrierung (AC, FC), zur Generierung (AG) oder zum Fernladen (ACH oder FCH) kryptographische Algorithmen vom Typ DES oder RSA sind.

5.  Anlage nach einem der Ansprüche 1 bis 4,
    dadurch gekennzeichnet, daß
    das Verfahren zum Fernladen der Vorausbezahlungsmittel (MPAY) in Echtzeit während der Kommunikation eingreift.

6.  Anlage nach einem der Ansprüche 1 bis 4,
    dadurch gekennzeichnet, daß
    das Verfahren zum Fernladen der Vorausbezahlungsmittel (MPAY) vor dem Aufbau des Rufs auf Anfrage des Teilnehmers oder auf Initiative des Netzes eingreift.

7.  Anlage nach einem der vorhergehenden Ansprüche,
    dadurch gekennzeichnet, daß
    die Vorausbezahlungsmittel (MPAY), die ersten Fernlademittel (ACHPA), die ersten Generierungsmittel (AGPA) und die ersten Mittel (AUPA) zur Authentifizierung des Terminalgeräts in einem abnehmbaren bzw. transportablen Teilnehmeridentitätsmodul (SIM) untergebracht sind, das geeignet ist, mit den Mitteln (ME) zum Aufbau der Interkommunikation zusammenzuwirken.

8.  Anlage nach einem der vorhergehenden Ansprüche,
    dadurch gekennzeichnet, daß
    das Teilnehmeridentitätsmodul SIM einen Speicher aufweist, der gegen das ungewollte direkte Schreiben der Daten durch die Außenwelt geschützt ist und der geeignet ist, Werteinheiten und eine Verarbeitungseinheit zu enthalten, die geeignet ist, die Benutzungsgebühren mit Hilfe der Werteinheiten zu bezahlen und den Speicher mit Hilfe der ferngeladenen Werteinheiten wieder aufzuladen.

9.  Anlage nach einem der vorhergehenden Ansprüche,
    dadurch gekennzeichnet, daß
    das Teilnehmeridentitätsmodul (SIM) in einer Karte vom ISO Standardtyp untergebracht ist und daß die Mittel (ME) zum Aufbau der Interkommunikation einen Leser zum Lesen der Karte aufweisen.

10. Anlage nach einem der Ansprüche 1 bis 8,
    dadurch gekennzeichnet, daß
    das Teilnehmeridentitätsmodul eine mechanische Schnittstelle aufweist, die geeignet ist, in die Mittel (ME) zum Aufbau der Interkommunikation eingesteckt zu werden.

11. Anlage nach einem der vorhergehenden Ansprüche,
    dadurch gekennzeichnet, daß
    die Interkommunikation zwischen dem unabhängigen Terminalgerät und der Basisstation funktechnisch bzw. drahtlos oder eine Draht-Interkommunikation ist.

12. Anlage nach einem der vorhergehenden Ansprüche,
    dadurch gekennzeichnet, daß
    das unabhängige Terminalgerät mobil oder stationär, persönlich oder öffentlich ist.

13. Verfahren zum gesicherten Fernladen von Vorausbezahlungsmitteln, folgende Schritte aufweisend:

    -   a) Vorsehen von mindestens einem Fernsprechwahlnetz (RTC);

    -   b) Vorsehen eines Systems (SAA) für den Zugang von unabhängigen bzw. autonomen Fernsprechteilnehmern mit mindestens einer Basisstation (BF), die mit dem Fernsprechwahlnetz verbunden ist, und von Betriebsmitteln, die mit der Basisstation verbunden sind, um die Benutzungsgebühren der gebührenpflichtigen Dienste des Fernsprechwahlnetzes (RTC) mittels Gebührenberechnungsmittel (MG) zu berechnen;

- c) Vorsehen von mindestens einem unabhängigen Terminalgerät (PA);

  - c1) um eine Interkommunikation mit der Basisstation (BF) aufzubauen;

  - c2) um Werteinheiten zu enthalten, die dazu bestimmt sind, die durch die Gebührenberechnungsmittel berechneten und übertragenen Benutzungsgebühren mit Hilfe von Vorausbezahlungsmitteln (MPAY) zu bezahlen;

  - c3) um eine Authentifizierungsfunktion (A) mit Hilfe eines vorbestimmten, für jeden Teilnehmer persönlichen Terminalgerät-Basisschlüssels (SB) mit Hilfe der ersten Terminalgerät-Authentifizierungsmittel (AUPA) einzustellen;

- d) Vorsehen eines Genehmigungszentrums (CA) :

  - d1) um die Chiffrier-/Dechiffrierfunktion (AC oder FC) mit Hilfe des Speicherschlüssels (KC oder FA) mittels zweiter Chiffrier/Dechiffriermittel (MACCA) einzustellen;

  - d2) um die Terminalgerät-Authentifizierungsfunktion (A) mit Hilfe des Terminalgerät-Basisschlüssels (SB) mittels zweiter Terminalgerät-Authentifizierungsmittel (AUPACA) einzustellen;

dadurch gekennzeichnet, daß
es ferner folgende Schritte aufweist:

- Auf der Ebene des unabhängigen Terminalgeräts (PA) Einstellen einer Generierungsfunktion (AG) mit Hilfe des Terminalgerät-Basisschlüssels (SB) mittels erster Generierungsmittel (AGPA);

- Einstellen einer Fernladefunktion (ACH oder FCH) mit Hilfe eines Fernladeschlüssels (KCH oder SCH), der das Transformierte eines durch die Generierungsfunktion (AG) mit Hilfe des Terminalgerät-Basisschlüssels (SB) vorbestimmten Worts ist, mittels erster Fernlademittel (ACHPA);

- auf der Ebene des Zugangssystems (SAA) Einstellen einer System-Authentifizierungsfunktion (AO oder FO) mit Hilfe eines vorbestimmten System-Basisschlüssels (KO oder SO) mittels erster System-Authentifizierungsmittel (AUSAA);

- Senden einer vorbestimmten Anzahl von Werteinheiten und Einstellen der Fernladefunktion (ACH oder SCH) mit Hilfe des Fernladeschlüssels (KCH oder PCH) mittels zweiter Fernlademittel (ACHSAA);

- auf der Ebene des Genehmigungszentrums (CA) Einstellen der System-Authentifizierungsfunktion (AO oder FO) mit Hilfe des System-Basisschlüssels (KO oder PO) mittels zweiter System-Authentifizierungsmittel (AUSAACA) und

- Einstellen der Generierungsfunktion (AG) mit Hilfe des Terminalgerät-Basisschlüssels (SB) mittels zweiter Generierungsmittel (AGCA);

daß das Verfahren ferner einen Fernladeschritt aufweist, in dem in Beantwortung eines Fernladeanfrage-Worts (R) einer vorbestimmten Anzahl von Werteinheiten, die von dem unabhängigen Terminalgerät (PA) herrühren, die ersten und zweiten Terminalgerät-Authentifizierungsmittel (AUPA und AUPACA) sowie die ersten und zweiten System-Authentifizierungsmittel (AUSAA und AUSAACA) eine jeweilige aktive Authentifizierung des unabhängigen Terminalgeräts sowie des Zugangssystems vornehmen, indem jeweils ein Terminalgerät-Authentifizierungswort (R0), das von dem Zugangssystem herrührt, und das durch die Terminalgerät-Authentifizierungsfunktion (A) mit Hilfe des Terminalgerät-Basisschlüssels (SB) Transformierte (RESO) dieses Worts ausgetauscht werden, und indem ein System-Authentifizierungswort (R2), das von dem Genehmigungszentrum (CA) herrührt, und das durch die System-Authentifizierungsfunktion (AO oder FO) mit Hilfe des System-Basisschlüssels (KO oder SO) Transformierte (RES2) dieses Worts ausgetauscht werden;

- daß im Fall der kontrollierten Authentifizierung des Zugangssystems und des unabhängigen Terminalgeräts die zweiten Generierungsmittel (AGCA) den Fernladeschlüssel (KCH oder (SCH, PCH)) auf der Ebene des Genehmigungszentrums (CA) berechnen, wobei der Fernladeschlüssel das Transformierte des Fernladeanfrage-Worts durch die Generierungsfunktion (AG) mit Hilfe des Terminalgerät-Basisschlüssels (SB) ist;

- daß im Fall der Generierung des Fernladeschlüssels auf der Ebene des Genehmigungszentrums die zweiten Chiffrier-/Dechiffriermittel (MACCA) den chiffrierten Ladeschlüssel (EKCH oder EPCH) mit Hilfe des Speicherschlüssels (KC oder FA) an die ersten Chiffrier/Dechiffriermittel (MACSAA) übertragen, die ihn dechiffrieren, um ihn auf der Ebene des Zugangssystems (SAA) zu speichern und

daß im Fall der Speicherung des Fernladeschlüssels in dem Zugangssystem (SAA) die ersten und zweiten Fernlademittel (ACHSAA und ACHPA) das Fernladeanfrage-Wort (R) der Anzahl (n) fernzuladender Werteinheiten sowie das durch die Fernladefunktion (ACH oder (FCH)) mit Hilfe des Fernladeschlüssels (KCH oder (PCH, SCH)) Transformierte (RES) des Fernladeanfrage-Worts austauschen, um auf gesicherte Weise die Vorausbezahlungsmittel der Anzahl (n) von Werteinheiten fernzuladen.

14. Verfahren nach Anspruch 13,
dadurch gekennzeichnet, daß
vor dem Austausch des Fernladeanfrage-Worts (R) und seines Transformierten (RES) die ersten und zweiten System-Authentifizierungsmittel (AUSAA und AUSAACA) ein Genehmigungs-Authentifizierungswort (R1) und sein durch die System-Authentifizierungsfunktion (AO oder FO) mit Hilfe des System-Authentifizierungsschlüssels (KO oder (SO, PO)) Transformiertes (RES1) austauschen, um die Genehmigung des Fernladebefehls zu authentifizieren.

15. Verfahren nach Anspruch 13 oder Anspruch 14,
dadurch gekennzeichnet, daß
gleichzeitig mit dem Austausch des Fernladeanfrage-Worts (R) und seines Transformierten (RES) die zweiten und ersten Fernlademittel (ACHSAA) und ACHPA) ein Empfangs-Authentifizierungswort (R2) und sein durch die Fernladefunktion (ACH oder FCH)) mit Hilfe des Fernladeschlüssels (KCH oder (PCH, SCH)) Transformiertes (RES2) austauschen, um den Empfang des Fernladebefehls zu authentifizieren.

## Claims

1. Telecommunications installation comprising:

   - at least one switched telephone network (RTC);

   - an autonomous telephone subscriber access system (SAA) comprising:

     . at least one base station (BF) connected to the switched telephone network;
     . operating means connected to the base station comprising charging means (MG) able to calculate the charges for using paying services of the switched telephone network (RTC);
     . first encoding/decoding means (MACSAA) able to establish a cryptographic function (AC or SA) with the aid of a storage key (KC or SA);

   - at least one autonomous station (PA) comprising:

     . means (ME) able to establish an interconnection with the base station (BF);
     . prepayment means (MPAY) able to contain value units for paying use charges calculated and transmitted by the charging means;
     . first set authentication means (AUPA) able to establish an authentication function (A) with the aid of a predetermined set base key (SB) individual to each subscriber;

   - an authorization centre (CA) comprising:

     . second encoding/decoding means (MACCA) able to establish the encoding/ decoding function (AC or FC) with the aid of the storage key (KC or FA);
     . second set authentication means (AUPACA) able to establish the set authentication function (A) with the aid of the set base key (SB);

   characterized in that the autonomous set (PA) also comprises:

   - first generator means (AGPA) able to establish a generation function (AG) with the aid of the set base key (SB);

   - first remote loading means (ACHPA) able to establish a remote loading function (ACH or SCH) with the aid of a remote loading key (KCH or SCH), which is the transform of a word predetermined by the generation function (AG) with the aid of the set base key (SB);

   in that the access system (SAA) also comprises:

   - first system authentication means (AUSAA) able to establish a system authentication function (A0 or F0) with the aid of a predetermined system base key (K0 or S0);

   - second remote loading means (ACHSAA) able to emit a predetermined number of value units and establish the remote loading function (ACH or FCH) with the aid of the remote loading key (KCH or PCH);

in that the authorization centre (CA) comprises:

- second system authentication means (AUSAACA) able to establish the system authentication function (A0 or F0) with the aid of the system base key (K0 or P0);

- and second generator means (AGCA) able to establish the generation function (AG or FG) with the aid of the set base key (SB); and

in that the installation also comprises means making it possible to implement a remote loading mode in which, in response to a remote loading request word (R) for a predetermined number of value units emanating from the autonomous set (PA), the first and second set authentication means (AUPA and AUPACA), as well as the first and second system authentication means (AUSAA and AUSAACA) effect a respective active authentication of the autonomous set, as well as of the access system, using means making it possible to respectively interchange a set authentication word (R0) emanating from the access system and the transform (RES0) of said word by the set authentication function (A) with the aid of the set base key (SB), as well as interchange a system authentication word (R2) emanating from the authorization centre (CA) and the transform (RES2) of said word by the system authentication function (A0 or F0) with the aid of the system base key (K0 or S0);

- in that in the case of controlled authenticity of the access system and the autonomous set, the second generator means (AGCA) are able to calculate the remote loading key (KCH or SCH, PCH) at the authorization centre (CA), the remote loading key being the transform of the remote loading request word by the generation function (AG) with the aid of the set base key (SB);

- in that in the case of the generation of the remote loading key at the authorization centre, the second encoding/decoding means (MACCA) are able to transmit the encoded loading key (EKCH or EPCH) with the aid of the storage key (KC or FA) to the first encoding/decoding means (MACSAA), which encode it for storing it at the access system (SAA) and

in the case of storage of the remote loading key in the access system (SAA), the first and second remote loading means (ACHSAA and ACHPA) are able to interchange the remote loading request word (R) of the number of value units to be remotely loaded (n), as well as the transform (RES) of said remote loading request word by the remote loading function (ACH or FCH) with the aid of the remote loading key (KCH or SCH,PCH) with a view to the securized remote loading of the prepayment means by said number of value units (n).

2. Installation according to claim 1, characterized in that prior to the interchange of the remote loading request word (R) and its transform (RES), the first and second system authentication means (AUSAA and AUSAACA) interchange an authentication-authorization word (R1) and its transform (RES1) by the system authentication function (A0 or F0) with the aid of the system authentication key (K0 or P0, S0) with a view to the authentication of the authorization of the remote loading order.

3. Installation according to claim 1 or 2, characterized in that simultaneously with the interchange of the remote loading request word (R) and its transform (RES), the first and second remote loading means (ACHSAA and ACHPA) interchange a reception authentication word (R2) and its transform (RES2) by the remote loading function (ACH or FCH) with the aid of the remote loading key (KCH or PCH,SCH) with a view to authenticating the reception of the remote loading order.

4. Installation according to one of the preceding claims, characterized in that the set authentication (A), system authentication (A0, F0), encoding/ decoding (AC, FC), generation (AG) or remote loading (ACH or FCH) functions are DES or RSA-type cryptographic algorithms.

5. Installation according to any one of the claims 1 to 4, characterized in that the remote loading procedure of the prepayment means (MPAY) intervenes in real time during the communication.

6. Installation according to any one of the claims 1 to 4, characterized in that the remote loading procedure of the prepayment means (MPAY) intervenes prior to call establishment, on the request of the subscriber or at the initiative of the network.

7. Installation according to any one of the preceding claims, characterized in that the prepayment means (MPAY), the first remote loading means (ACHPA), the first generation means (AGPA) and the first set authentication means AUPA) are housed in a replaceable, subscriber identity module (SIM) able to cooperate with the interconnection establishment means (ME).

8. Installation according to any one of the preceding claims, characterized in that the subscriber identity module (SIM) comprises a memory protected against the direct untimely writing of data by the outside world and able to contain value units and a processing unit able to pay the use charges with the aid of said value units and reload the memory with the aid of the remotely loaded value units.

9. Installation according to any one of the preceding claims, characterized in that the subscriber identity module (SIM) is housed in a standard, ISO-type card and in that the interconnection establishment means (ME) comprise a reader for reading said card.

10. Installation according to any one of the claims 1 to 8, characterized in that the subscriber identity module comprises a mechanical interface, which can be plugged into the interconnection establishment means (ME).

11. Installation according to any one of the preceding claims, characterized in that the interconnection between the autonomous set and the base station is by radio or wire.

12. Installation according to any one of the preceding claims, characterized in that the autonomous set is mobile or fixed, personal or public.

13. Process for the securized remote loading of prepayment means comprising the following stages:

- a) providing at least one switched telephone network (RTC);

- b) providing an autonomous telephone subscriber access system (SAA) with at least one base station (BF) connected to the switched telephone network and operating means connected to the base station for calculating charges for using paying services of the switched telephone network (RTC) by means of the charging means (MG);

- c) providing at least one autonomous set (PA);

  - c1) for establishing an interconnection with the base station (BF),
  - c2) for containing value units for paying the use charges calculated and transmitted by the charging means with the aid of the prepayment means (MPAY),
  - c3) for establishing an authentication function (A) with the aid of a predetermined set base key (BB) individual to each subscriber with the aid of first set authentication means (AUPA);

- d) providing an authorization centre (CA):

  - d1) for establishing the encoding/decoding function (AC or FC) with the aid of the storage key (KC or FA) by means of second encoding/ decoding means (MACCA),
  - d2) for establishing the set authentication function (A) with the aid of the set base key (SB) by means of second set authentication means (AUPACA);

characterized in that it also comprises the following stages:

- at the autonomous set (PA), establishing a generation function (AG) with the aid of the set base key (SB) by means of first generator means (AGPA);

- establishing a remote loading function (ACH or FCH) with the aid of a remote loading key (KCH or SCH), which is the transform of a word predetermined by the generation function (AG) with the aid of the set base key (SB), by means of first remote loading means (ACHPA);

- at the access system (SAA), establishing a system authentication function (A0 or F0) with the aid of a predetermined system base key (K0 or S0), by means of first system authentication means (AUSAA);

- emitting a predetermined number of value units and establishing the remote loading function (ACH or SCH) with the aid of the remote loading key (KCH or PCH), by means of second remote loading means (ACHSAA);

- at the authorization centre (CA), establishing the system authentication function (A0 or F0) with the aid of the system base key (K0 or P0), by means of second system authentication means (AUSAACA); and

- establishing the generation function (AG) with the aid of the set base key (SB), by means of second generator means (AGCA);

in that the process also comprises a remote loading stage, in which in response to a remote loading request word (R) for a predetermined number of value units emanating from the autonomous set (PA), the first and second set authentication means (AUPA and AUPACA), as well as the first and second system authentication means (AUSAA and AUSAACA) carry out a respective active authentication of the autonomous set, as well as the access system, respectively interchanging a set authentication word (R0) emanating from the access system and the transform (RES0) of said word by the set authentication function (A) with the aid of the set base key (SB), as well as by interchanging a system authentication word (R2) emanating from the authorization centre (CA) and the transform (RES2) of said word by the system authentication function (A0 or F0) with the aid of the system base key (K0 or S0);

- in that in the case of controlled authentication of the access system and autonomous set, the second generator means (AGCA) calculate the remote loading key (KCH or (SCH,PCH)) at the authorization centre (CA), the remote loading key being the transform of the remote loading request word by the generation function (AG) with the aid of the set base key (SB);

- in that in the case of generation of the remote loading key at the authorization centre, the second encoding/decoding means (MACCA) transmit the encoded loading key (EKCH or EPCH) with the aid of the storage key (KC or FA) to the first encoding/decoding means (MACSAA), which encode it for storage at the access system (SAA) and

in the case of storage of the remote loading key in the access system (SAA), the first and second remote loading means (ACHSAA and ACHPA) interchange the remote loading request word (R) for the number of value units to be remotely loaded (n), as well as the transform (RES) of said remote loading request word by the remote loading function (ACH or FCH) with the aid of the remote loading key (KCH or PCH,SCH) with a view to the remote loading, in securized manner, of the prepayment means by said number of value units (n).

14. Process according to claim 13, characterized in that prior to the interchange of the remote loading request word (R) and its transform (RES), the first and second system authentication means (AUSAA and AUSAACA) interchange an authorization-authentication word (R1) and its transform (RES1) by the system authentication function (A0 or F0) with the aid of the system authentication key (K0 or S0,P0) with a view to authenticating the authorization of the remote loading order.

15. Process according to claim 13 or 14, characterized in that simultaneously with the interchange of the remote loading request word (R) and its transform (RES), the second and first remote loading means (ACHSAA and ACHPA) interchange a reception authentication word (R2) and its transform (RES2) by the remote loading function (ACH or FCH) with the aid of the remote loading key (KCH or PCH,SCH) with a view to the authentication of the reception of the remote loading order.

# FIG. 1

## *FIG.2*

CA | SAA | PA

Seuil atteint —10

Génération mot d'authentification
poste RO + envoi RO
12

Génération mot demande de
téléchargement R de n unités
de valeur + envoi R et n
14

Calcul RESO = A(SB,RO,n)
+ envoi RESO
16

18
Génération mot demande d'autorisation
de téléchargement R1

Envoi R1,R,RO,RESO,n
20

Génération mot d'authentification
systéme R2 + envoi R2 —22

Calcul RES2 = AO(KO,R2,n)
ou
RES2 = SO(R2,n)
+
envoi RES2
24

Calcul RESO' = A(SB,RO,n)
comparaison RESO' et RESO —26

Calcul RES2' = AO(KO,R2,n)
comparaison RES2' et RES2 —28

PO(RES2) = ?(R2,n) —30

CA                     SAA

| Calcul de la clé de téléchargement |
| :---: |

40

$$KCH = AG(SB,R)$$ — 42

$$(PCH,SCH) = AG(SB,R)$$ — 44

47

$$KC = AGC(KO,R1)$$ — 46        $$KC = AGC(KO,R1)$$

$$EKCH = AC(KC,KCH)$$
$$ou$$
$$EPCH = AC(KC,PCH)$$ — 48

$$EKCH = FA(KCH)$$
$$ou$$
$$EPCH = FA(PCH)$$ — 50

| Envoi EKCH ou EPCH |
| :---: |

52

54

$$AC(KC,EKCH) = KCH$$

56

$$AC(KC,EPCH) = PCH$$

58

$$SA(EPCH) = PCH$$

60

$$SA(EKCH) = KCH$$

*FIG.3*

EP 0 589 757 B1

SAA                                          PA          100

                                    ┌──────────────────────┐
                                    │   KCH = AG(SB,R)      │
                                    └──────────────────────┘

                                    ┌──────────────────────┐
                                    │  (PCH,SCH) = AG(SB,R) │
                                    └──────────────────────┘
                                                 102

┌─────────────────────────────┐
│ Montant à télécharger C1     │─104
└─────────────────────────────┘

┌─────────────────────────────┐
│    RES = ACH(KCH,R,C)        │
│          ou                  │─106
│    RES = PCH(R,C1)           │
└─────────────────────────────┘

┌─────────────────────────────┐
│  Génération d'un mot         │
│  demande de réception R3     │─108
└─────────────────────────────┘

┌─────────────────────────────┐
│   Envoi RES,C1,R3            │
└─────────────────────────────┘
              110                                    112

                              ┌───────────────────────────┐
                              │  RES' = ACH(KCH,R,C1)      │
                              │  comparaison RES et RES'   │
                              └───────────────────────────┘

                              ┌───────────────────────────┐
                              │   SCH(RES,R) = ? C1        │─114
                              └───────────────────────────┘

                              ┌───────────────────────────┐
                              │    C2 = C0 + C1            │─116
                              └───────────────────────────┘

                              ┌───────────────────────────┐
                              │  RES3 = ACH(KCH,R3,C2)     │─118
                              └───────────────────────────┘

                              ┌───────────────────────────┐
                              │  RES3 = SCH(C2,R3)         │─120
                              └───────────────────────────┘

           124                ┌───────────────────────────┐
                              │    Envoi RES3 et C2        │
┌─────────────────────────┐   └───────────────────────────┘
│  PCH(R3,RES3) = ? C2     │                  122
└─────────────────────────┘

┌─────────────────────────────┐
│  RES3' = ACH(KCH,R3,C2)      │─126
└─────────────────────────────┘

┌─────────────────────────────┐
│ Comparaion RES3' et RES3     │─128
└─────────────────────────────┘

*FIG.4*

23